# FASCICULE DE BREVET EUROPEEN

(11) **EP 1 623 591 B1**
(45) Date de publication et mention de la délivrance du brevet: **07.03.2012**
(21) Numéro de dépôt: 04742657.2
(22) Date de dépôt: 06.05.2004
(51) Int. Cl.: H04W 24/08

(54) **PROCEDE D'ACTIVATION D'ENREGISTREMENTS D'EVENEMENTS RELATIFS A DES TERMINAUX ET EQUIPEMENTS POUR LA MISE EN OEUVRE DU PROCEDE**
VERFAHREN ZUM AKTIVIEREN VON AUFZEICHNUNGEN VON EREIGNISSEN BEZÜGLICH ENDGERÄTEN UND GERÄTE DAFÜR
METHOD FOR ACTIVATING RECORDINGS OF EVENTS CONCERNING TERMINALS AND EQUIPMENT THEREFOR

(30) Priorité: 12.05.2003 FR 0305713
(43) Date de publication de la demande: 08.02.2006
(73) Titulaire: Alcatel Lucent, 75007 Paris (FR)
(72) Inventeur: FAUCONNIER, Denis, F-78470 Saint-Rémy lès Chevreuse (FR); SEHEDIC, Yann, F-92170 Vanves (FR)
(74) Mandataire: Nicolle, Olivier
(86) Numéro de dépôt international: PCT/FR2004/001095
(87) Numéro de publication internationale: WO 2004/102990

(56) Documents cités:
- EP-A- 1 018 846
- WO-A-01/47182
- US-B1- 6 473 620

## Description

La présente invention concerne les enregistrements d'événements relatifs à des terminaux dans un système de radiocommunication. Elle concerne plus particulièrement le mode d'activation de tels enregistrements.

L'enregistrement de certains événements pouvant intervenir lors d'une communication ou d'un échange d'informations avec un terminal est une opération courante dans les systèmes de radiocommunication. Les événements ainsi mémorisés sont généralement des messages de signalisation, typiquement de niveau 3, échangés entre le terminal et le système de radiocommunication. Une telle opération est connue sous la terminologie de "trace".

La trace est effectuée au niveau d'un ou plusieurs noeuds du système de radiocommunication et peut être exploitée par l'opérateur de ce système à des fins de traitement ultérieur (analyse statistique des communications dans une zone géographique, étude du comportement d'une communication particulière, etc.).

Elle a par exemple fait l'objet d'une normalisation dans le système GSM ("Global System for Mobile communications"), dans la spécification technique TS 100 627 ou GSM 12.08, version 4.6.1, "Subscriber and equipment trace", publiée en octobre 2001, par l'ETSI ("European Telecommunications Standards Institute").

Dans le système UMTS ("Universal Mobile Telecommunication System"), il est prévu que la trace puisse être mise en oeuvre dans la partie radio du réseau UTRAN ("Universal Terrestrial Radio Access Network") pour enregistrer des éléments de signalisation sur les interfaces lu (entre un commutateur du réseau coeur et un contrôleur de réseau radio), lur (entre deux contrôleurs de réseau radio), lub (entre un contrôleur de réseau radio et une station de base) et radio (entre un contrôleur de réseau radio et un terminal radio).

L'activation de la trace consiste à transmettre une commande au noeud qui va procéder à l'enregistrement. Cette activation est généralement basée sur l'identifiant d'un terminal dont les communications doivent faire l'objet d'une trace. L'identifiant du terminal peut être relatif à l'abonné utilisant le terminal. Dans ce cas, l'identifiant sera avantageusement le paramètre classique IMSI ("International Mobile Station Identity"). In peut également être relatif à l'équipement terminal. Dans ce cas, l'identifiant sera par exemple le paramètre classique IMEI ("International Mobile station Equipment Identity"), un paramètre obtenu à partir de l'IMEI, ou bien encore le paramètre IMEISV ("IMEI Software Version").

Lorsque la trace doit être réalisée par un contrôleur de réseau radio dans un système tel que l'UMTS, c'est-à-dire dans un RNC ("Radio Network Controller"), deux modes d'activation sont possibles.

Dans un premier mode, la trace est activée par transmission d'une commande au RNC depuis le réseau coeur. C'est typiquement le HLR ("Home Location Register"), qui est une base de données du réseau coeur contenant des informations relatives aux abonnés du réseau, qui est alors à l'origine de la commande, laquelle sera transmise au RNC via l'interface lu. Ce mode d'activation par signalisation ("signalling activation") de la trace est adapté notamment pour effectuer une trace sur les communications d'un abonné particulier du réseau.

Dans un second mode, la trace est activée localement au niveau du RNC. Cette activation est généralement réalisée par l'intermédiaire d'un centre d'exploitation et de maintenance, par exemple l'OMC en UMTS (Operation and Maintenance Centre), qui transmet la commande au RNC concerné. Ce mode d'activation de la trace ("management activation") est bien adapté notamment aux cas où l'on souhaite obtenir des enregistrements sur une zone donnée du réseau, éventuellement pour un type d'équipement particulier.

Le second mode d'activation est très utilisé en pratique, notamment dans le système GSM, car il est simple à mettre en oeuvre et permet en outre aux opérateurs d'obtenir des statistiques pertinentes, par exemple sur le comportement d'un modèle de terminal sur une zone géographique ciblée de leur réseau.

Une transposition de cette fonctionnalité au système UMTS nécessiterait la transmission d'un identifiant de terminal au RNC. Or les principaux acteurs dans le domaine en cause considèrent la présence systématique d'un tel identifiant au sein du RNC comme tout à fait indésirable pour diverses raisons.

En outre, lorsque l'identifiant de terminal utilisé est une identité d'équipement, par exemple l'IMEI, une activation de la trace au RNC sur la base de ce paramètre nécessiterait que le RNC puisse connaître l'IMEI de chaque terminal impliqué dans une communication sous son contrôle. Généralement, lorsqu'un IMEI est transmis par un terminal au réseau coeur, il l'est de façon transparente pour le RNC. Le RNC ne peut donc disposer du paramètre IMEI que si le réseau coeur le lui transmet de façon spécifique. Un tel mécanisme provoquerait alors un surcroît de signalisation préjudiciable au système.

un autre exemple est dans le document EP1018846 (LUCENT Tech.) 12-07-2000.

Un but de la présente invention est de pallier les inconvénients susmentionnés, en proposant un mécanisme efficace d'activation de la trace.

L'invention propose ainsi un procédé d'activation d'enregistrements d'événements relatifs à des terminaux radio dans un système de radiocommunication comprenant un réseau coeur, au moins un contrôleur de réseau radio connecté au réseau coeur et agencé pour contrôler des communications radio avec des terminaux et au moins un centre d'exploitation apte à superviser ledit contrôleur de réseau radio, le procédé comprenant les étapes suivantes :
- transmettre depuis le centre d'exploitation à destination d'un contrôleur de réseau radio, une liste codée d'identifiants de terminaux ;
- transmettre la liste codée d'identifiants de terminaux au réseau coeur depuis le contrôleur de réseau radio ;
- décoder la liste codée d'identifiants de terminaux au réseau coeur ;
- détecter, au réseau coeur, une communication radio sous le contrôle du contrôleur de réseau radio, avec un terminal identifié dans la liste décodée ; et
- commander au contrôleur de réseau radio, depuis le réseau coeur, le démarrage d'un enregistrement d'événements relatif à la communication détectée.

Un tel mode de fonctionnement assure la souplesse d'une activation locale de la trace, par l'intermédiaire du centre d'exploitation, qui peut être un OMC, ou bien une unité de supervision co-localisée avec un contrôleur de réseau radio. Il permet également de laisser au réseau coeur la gestion de la commande d'activation de la trace. Il permet en outre d'avoir l'activation locale de la trace dans le contrôleur de réseau radio tout en évitant de fournir systématiquement à ce dernier l'identifiant de terminal pour chaque communication.

L'invention propose également un système de radiocommunication agencé pour mettre en oeuvre le procédé d'activation de la trace susmentionné.

Elle propose en outre un centre d'exploitation, un réseau coeur et un contrôleur de réseau radio aptes à contribuer à la mise en oeuvre du procédé.

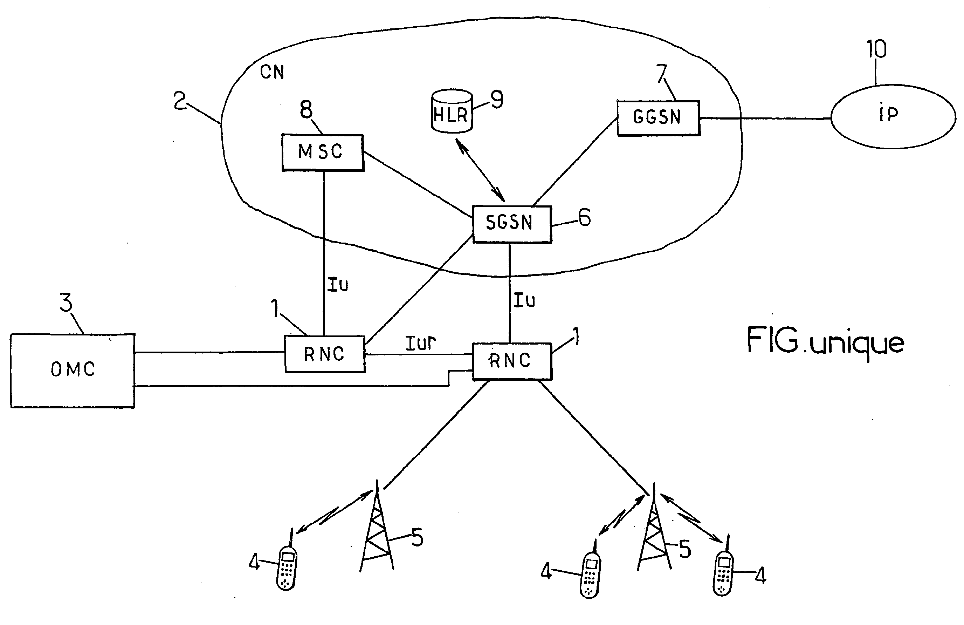

D'autres particularités et avantages de la présente invention apparaîtront dans la description ci-après d'exemples de réalisation non limitatifs, en référence aux dessins annexés, dans lesquels la figure unique est un schéma simplifié d'un système apte à mettre en oeuvre l'invention.

La figure montre un système de radiocommunication comprenant des RNC 1, un réseau coeur ou "Core Network" CN 2, ainsi qu'un OMC 3, selon les définitions usuelles de ces dispositifs constitutifs d'un réseau UMTS rappelées en introduction.

Le CN 2 comprend un maillage de commutateurs aptes à transmettre du trafic de parole en mode circuit comme le MSC 8 ("Mobile service Switching Center") ou du trafic de données en mode paquet comme le SGSN 6 ("Serving GPRS Support Node", GPRS signifiant "General Packet Radio Service"). Les commutateurs sont classiquement reliés entre eux et/ou à un commutateur particulier servant de plateforme vers un réseau externe, comme par exemple le GGSN 7 ("Gateway GPRS Support Node") qui est interconnecté avec un réseau de données de type IP 10 ("Internet Protocol") dans l'exemple illustré sur la figure.

Les RNC 1 sont reliés au CN 2, par l'intermédiaire d'un commutateur du CN, par exemple un SGSN 6 ou un MSC 8. L'interface normalisée qui relie ces équipements est l'interface lu.

Par ailleurs, l'OMC 3 est capable de superviser et d'assurer l'exploitation des RNC 1, par l'intermédiaire de l'interface qui le relie à ces équipements. L'OMC est une entité d'opération et de maintenance classique dans les systèmes du type de celui de la figure. Toutefois, d'autres équipements pourraient également être utilisés pour superviser le système. Ces derniers peuvent être regroupés sous l'appellation fonctionnelle générique d'OSS ("Operations Support System").

Un RNC 1 a sous son contrôle un ensemble de stations de base 5 ou "Nodes B" selon la terminologie de l'UMTS, par l'intermédiaire desquelles des terminaux radio 4 peuvent communiquer avec le RNC.

Selon l'invention, lorsqu'on souhaite activer des traces relatives à des terminaux, pour des communications en cours ou à venir, une demande doit être effectuée au RNC 1 contrôlant ces communications. Pour ce faire, la demande peut être transmise via l'OMC 3, comme dans le cas d'une activation de type "management". Cette demande est ensuite transférée au(x) RNC 1 au(x)quel(s) elle s'adresse, via l'interface qui relie ces entités. On peut noter que la demande d'activation pourrait également être effectuée directement au RNC 1 concerné ou via une unité physique co-localisée avec le RNC 1. Toutefois, un organe d'exploitation centralisé pour émettre cette demande, offre une plus grande souplesse de mise en oeuvre.

La demande d'activation de traces comporte avantageusement des paramètres relatifs à des modalités de mise en oeuvre de la trace. Par exemple, ces paramètres peuvent spécifier une durée d'enregistrement à respecter, ou bien une liste identifiant des stations de base sous le contrôle du RNC 1 dans la zone de couverture desquelles les communications devront faire l'objet d'une trace.

La demande d'activation de la trace est générique dans la mesure où elle ne spécifie pas un identifiant de terminal particulier (de façon à éviter les risques évoqués en introduction), mais comprend une liste codée d'identifiants de terminaux.

Comme indiqué plus haut, on entend par identifiant de terminal, un identifiant désignant un abonné ou bien un équipement. On se place ci-après dans ce dernier cas.

L'identifiant du terminal peut être l'IMEI, tel qu'il est spécifié dans la spécification technique ETSI TS 123 003, version 5.5.1, Release 5, "Numbering, Addressing and Identification" (3GPP TS 23.003), publiée par le 3GPP ("3rd Generation Partnership Project") en janvier 2003. On peut également utiliser d'autres paramètres pour identifier le terminal. Par exemple l'IMEISV peut être utilisé lorsqu'il est disponible dans le système utilisé. Celui-ci incorpore à l'IMEI un numéro de version logicielle SV ("Software Version"), conformément à la spécification technique 122 016 précitée. Bien sûr, tout autre paramètre pertinent peut être utilisé dans ce contexte. On parlera par la suite d'IMEI, sans préjuger du fait que l'identifiant du terminal utilisé peut être différent.

La demande générique d'activation de la trace comprend donc une liste codée d'IMEI pour des terminaux respectifs. Par exemple, le codage utilisé peut être un "masque" d'IMEI, c'est-à-dire une spécification de la valeur de certains bits seulement de l'IMEI, les bits non spécifiés pouvant prendre toutes les valeurs possibles.

Ainsi, la valeur des IMEI pour lesquels une trace doit être mise en oeuvre n'est pas communiquée en tant que telle au RNC dans la demande générique d'activation de la trace.

De façon avantageuse, le RNC 1 ayant reçu la demande d'activation de la trace détermine une référence qu'il associe à la demande, c'est-à-dire à la liste codée d'IMEI. Cette référence pourra servir ultérieurement à identifier les traces effectuées en rapport avec ladite demande d'activation.

Le RNC 1 transmet alors à un noeud du CN 2, par exemple un MSC 8 ou un SGSN 6, la liste codée d'IMEI qu'il a reçue. Cette transmission est faite sans que le RNC ait préalablement décodé la liste codée d'IMEI et de préférence sans qu'il en conserve de copie. De cette manière, on s'assure que les IMEI inclus dans la liste codée ne seront pas connus individuellement du RNC 1. De façon avantageuse, cette transmission contient la référence correspondante déterminée par le RNC 1.

On se distingue donc de l'activation de la trace du type "management", puisque le RNC ne met pas en oeuvre la trace à ce stade, dans la mesure où il n'a pas identifié les IMEI qui doivent faire l'objet d'une trace.

Le noeud ayant reçu la liste codée d'IMEI depuis le RNC 1, par exemple le SGSN 6, décode alors cette liste. Il vérifie ensuite, à chaque établissement de communication ou échange d'informations avec un terminal dans la zone sous le contrôle du RNC 1, si le terminal possède un IMEI faisant partie de la liste décodée d'IMEI. Lorsque le codage utilisé est un masque, le SGSN 6 vérifie si ce masque s'applique à l'IMEI du terminal en communication, c'est-à-dire si l'IMEI de ce terminal a le format spécifié par le masque. Si tel est le cas, cela signifie que la communication impliquant ce terminal doit faire l'objet d'une trace.

Si le SGSN 6 a détecté une communication devant faire l'objet d'une trace, il commande alors l'activation d'une telle trace au RNC 1, de la même manière qu'il le ferait si le mode d'activation "signalling" était mis en oeuvre dans le système représenté sur la figure.

De façon avantageuse, la commande d'activation envoyée du SGSN 6 au RNC 1 contient la référence préalablement déterminée par le RNC 1. La transmission de cette référence permet de faire le lien entre la demande d'activation de la trace formulée initialement par l'OMC 3, c'est-à-dire la transmission initiale de la liste codée d'IMEI, et la trace finalement mise en oeuvre au RNC 1.

La commande d'activation de la trace peut être effectuée par l'intermédiaire d'un nouveau message de signalisation ou bien d'un message existant entre le CN 2 et le RNC 1. Dans ce dernier cas, on pourra avantageusement utiliser le message "CN Invoke Trace" prévu au paragraphe 8.17 de la spécification technique 25.413, version 5.4.0, Release 5, "UTRAN lu interface RANAP signalling", publiée par le 3GPP en mars 2003.

Cette partie du mécanisme d'activation de la trace est similaire à l'activation "signalling". La commande d'activation de la trace transmise par le CN 2 identifie la communication devant faire l'objet d'une trace, par exemple en indiquant au RNC 2 un identifiant de la connexion correspondante.

A la réception de la commande d'activation de la trace, le RNC 1 est donc capable de démarrer l'enregistrement d'événements pour la communication détectée, comme il le ferait dans le cas d'une activation de type "signalling". En outre, lorsque le message d'activation reçu du CN 2 comprend la référence préalablement déterminée pour la demande initiale de trace, le RNC 1 retrouve les paramètres relatifs à des modalités de mise en oeuvre de la trace qui lui avaient été transmis initialement par l'OMC 3 et il les associe à la trace qu'il est sur le point de démarrer.

On peut noter que la commande d'activation peut elle-même contenir d'autres informations relatives à des modalités d'enregistrement qui seront prises en compte par le RNC 1, par exemple une désignation du type de trace à effectuer. Le type de trace donne alors des indications sur des modalités de mise en oeuvre de la trace, par exemple sur les événements à enregistrer. La commande d'activation peut également contenir l'identité d'un OMC auquel la trace sera envoyée, une fois achevée, à des fins d'analyse et de traitement ultérieur. Le message "CN Invoke Trace" évoqué plus haut prévoit d'ailleurs des champs à cet effet.

Grâce à l'invention décrite ci-dessus, l'activation de la trace possède donc la simplicité de mise en oeuvre du mode dit "management" puisque la demande initiale de trace est réalisée localement, éventuellement via un OMC. Elle évite en outre les inconvénients liés à ce mode d'activation de la trace et notamment la nécessité pour le RNC concerné de connaître et de vérifier l'identité de chaque terminal dans sa zone de contrôle. Ce dernier point est réalisé par l'intervention du CN qui commande finalement l'activation de la trace lorsqu'il détecte une communication ou un échange d'informations impliquant un terminal faisant partie du groupe de terminaux à tracer, selon une procédure proche du mode d'activation dit "signalling".

## Revendications

1. Procédé d'activation d'enregistrements d'événements relatifs à des terminaux radio (4) dans un système de radiocommunication comprenant un réseau coeur (2), au moins un contrôleur de réseau radio (1) connecté au réseau coeur et agencé pour contrôler des communications radio avec des terminaux et au moins un centre d'exploitation (3) apte à superviser ledit contrôleur de réseau radio, le procédé comprenant les étapes suivantes :
- transmettre depuis le centre d'exploitation à destination d'un contrôleur de réseau radio, une liste codée d'identifiants de terminaux ;
- transmettre la liste codée d'identifiants de terminaux au réseau coeur depuis le contrôleur de réseau radio ;
- décoder la liste codée d'identifiants de terminaux au réseau coeur ;
- détecter, au réseau coeur, une communication radio sous le contrôle du contrôleur de réseau radio, avec un terminal identifié dans la liste décodée ; et
- commander au contrôleur de réseau radio, depuis le réseau coeur, le démarrage d'un enregistrement d'événements relatif à la communication détectée.

2. Procédé selon la revendication 1, dans lequel la transmission de la liste codée d'identifiants de terminaux comprend en outre la transmission d'un ensemble de paramètres relatifs à des modalités d'enregistrement tels qu'une durée d'enregistrement ou des identifiants de zones sous le contrôle du contrôleur de réseau radio auxquelles les enregistrements d'événements sont limités, et dans lequel l'enregistrement d'événements relatif à la communication détectée respecte lesdites modalités d'enregistrement.

3. Procédé selon la revendication 1 ou 2, dans lequel une référence est allouée par le contrôleur de réseau radio à la liste codée d'identifiants de terminaux, et dans lequel ladite référence est transmise au réseau coeur en liaison avec la liste codée d'identifiants de terminaux.

4. Procédé selon la revendication 3, dans lequel la commande pour démarrer un enregistrement d'événements relatif à la communication détectée inclut en outre la référence allouée à la liste codée d'identifiants de terminaux.

5. Procédé selon l'une quelconque des revendications précédentes, dans lequel la commande pour démarrer un enregistrement d'événements relatif à la communication détectée inclut en outre une indication relative à des modalités d'enregistrement telles qu'une identification des événements devant faire l'objet de l'enregistrement.

6. Système de radiocommunication agencé pour mettre en oeuvre le procédé d'activation d'enregistrements d'événements selon l'une quelconque des revendications 1 à 5.

7. Contrôleur de réseau radio (1) dans un système de radiocommunication agencé pour mettre en oeuvre une activation d'enregistrements d'événements relatifs à des terminaux radio (4), le système de radiocommunication comprenant en outre un réseau coeur (2) et un centre d'exploitation (3) apte à superviser le contrôleur de réseau radio, le contrôleur de réseau radio étant connecté au réseau coeur et comprenant des moyens pour contrôler des communications radio avec des terminaux et comprenant en outre :
- des moyens pour recevoir depuis le centre d'exploitation, une liste codée d'identifiants de terminaux ;
- des moyens pour transmettre la liste codée d'identifiants de terminaux au réseau coeur ; et
- des moyens pour recevoir, depuis le réseau coeur, et appliquer une commande de démarrage d'un enregistrement d'événements relatif à une communication avec un terminal identifié dans la liste codée d'identifiants de terminaux, ladite liste étant décodée en réseau coeur, ladite communication ayant été détectée au réseau coeur.

8. Contrôleur de réseau radio selon la revendication 7, dans lequel les moyens pour recevoir une liste codée d'identifiants de terminaux comprennent des moyens pour recevoir en outre un ensemble de paramètres relatifs à des modalités d'enregistrement tels qu'une durée d'enregistrement ou des identifiants de zones sous le contrôle du contrôleur de réseau radio auxquelles les enregistrements d'événements sont limités, le contrôleur de réseau radio comprenant en outre des moyens pour appliquer la commande de démarrage de l'enregistrement d'événements relatif à ladite communication de manière à ce que ladite communication respecte lesdites modalités d'enregistrement.

9. Contrôleur de réseau radio selon la revendication 7 ou 8, comprenant en outre des moyens pour allouer une référence à la liste codée d'identifiants de terminaux et des moyens pour transmettre ladite référence au réseau coeur en liaison avec la liste codée d'identifiants de terminaux.

10. Contrôleur de réseau radio selon l'une quelconque des revendications 7 à 9, dans lequel les moyens pour recevoir une commande de démarrage d'un enregistrement d'événements relatif à une communication comprennent des moyens pour recevoir en outre la référence allouée à la liste codée d'identifiants de terminaux.

11. Contrôleur de réseau radio selon l'une quelconque des revendications 7 à 9, dans lequel les moyens pour recevoir une commande de démarrage d'un enregistrement d'événements relatif à une communication comprennent des moyens pour recevoir en outre une indication relative à des modalités d'enregistrement telles qu'une identification des événements devant faire l'objet de l'enregistrement.

12. Réseau coeur (2) d'un système de radiocommunication agencé pour mettre en oeuvre une activation d'enregistrements d'événements relatifs à des terminaux radio (4), le système de radiocommunication comprenant en outre au moins un contrôleur de réseau radio (1) connecté au réseau coeur et agencé pour contrôler des communications radio avec des terminaux radio et au moins un centre d'exploitation (3) apte à superviser ledit contrôleur de réseau radio, le réseau coeur comprenant :
- des moyens pour recevoir, depuis le contrôleur de réseau radio, une liste codée d'identifiants de terminaux ;
- des moyens pour décoder la liste codée ;
- des moyens pour détecter une communication sous le contrôle du contrôleur de réseau radio, avec un terminal identifié dans la liste décodée ; et
- des moyens pour commander au contrôleur de réseau radio le démarrage d'un enregistrement d'événements relatif à la communication détectée.

13. Réseau coeur selon la revendication 12, comprenant en outre des moyens pour recevoir une référence en liaison avec la liste codée.

14. Réseau coeur selon la revendication 12 ou 13, dans lequel les moyens pour commander le démarrage d'un enregistrement d'événements relatif à la communication détectée comprennent des moyens pour transmettre ladite référence.

15. Réseau coeur selon l'une quelconque des revendications 12 à 14, dans lequel les moyens pour commander le démarrage d'un enregistrement d'événements relatif à la communication détectée comprennent des moyens pour transmettre une indication relative à des modalités d'enregistrement telles qu'une identification des événements devant faire l'objet de l'enregistrement.

## Claims

1. A method for activating event recordings related to radio terminals (4) within a radio communication system comprising a core network (2), at least one radio network controller (1) connected to the core network and operative to control radio communications with terminals, and at least one operating center (3) capable of monitoring said radio network controller, which method comprises the following steps:
- transmitting an encoded list of terminal identifiers, from the operating center to a radio network controller,
- transmitting the encoded list of terminal identifiers to the core network from the radio network controller;
- decoding the encoded list of terminal identifiers to the core network;
- detecting, within the core network, a radio communication under the control of the radio network controller, with an identified terminal within the decoded list; and
- commanding the radio network controller, from the core network, to start an event recording related to the detected communication.

2. A method according to claim 1, wherein the transmission of the encoded list of terminal identifiers additionally comprises the transmission of a set of parameters related to recording terms such as a recording duration or identifers of zones under the radio network controller's control to which the event recordings are limited, and wherein the event recording related to the detected communication follows said recording terms.

3. A method according to claim 1 or 2, wherein a reference is allocated by the radio network controller to the encoded list of terminal identifers, and wherein said reference is transmitted to the core network in connection with the encoded list of terminal identifiers.

4. A method according to claim 3, wherein the command to start an event recording related to the detected communication additionally includes the reference assigned to the encoded list of terminal identifiers.

5. A method according to any one of the preceding claims, wherein the command to start an event recording related to the detected communication additionally includes an indication related to recording terms such as an identification of the events that are to be recorded.

6. A radio communication system operative to implement the method for activating event recordings according to one of the claims 1 to 5.

7. A radio network controller (1) within a radio communication system operative to implement an activation of event recordings related to radio terminals (4), the radio communication system additionally comprising a core network (2) and an operating center (2) capable of monitoring the radio network controller, the radio network controller being connected to the core network and comprising means for controlling radio communications with terminals and additionally comprising:
- means for receiving from the operating center, an encoded list of terminal identifiers;
- means for transmitting the encoded list of terminals to the core network; and
- means for receiving, from the core network, and applying a start command of an event recording related to a communication with a terminal identified within the encoded list of terminal identifiers, said list being decoded within the core network, said communication having been detected within the core network.

8. A radio network controller according to claim 7, wherein the means for receiving an encoded list of terminal identifiers comprise means for additionally receiving a set of parameters related to recording terms such as a recording duration or identifiers of zones under the control of the radio network controller to which the event recordings are limited, the radio network controller to which the event recordings are limited, the radio network controller additionally comprising means for applying the start command of an event recording related to said communication, in such a way that said communication follows said recording terms.

9. A radio network controller according to claim 7 or 8, additionally comprising means for assigning a reference to the encoded list of terminal identifiers and means for transmitting said reference to the core network in connection with the encoded list of terminal identifiers.

10. A radio network controller according to any one of the claims 7 to 9, wherein the means for receiving a start order of an event recording related to a communication comprise means for additionally receiving the reference assigned to the encoded list of terminal identifiers.

11. A radio network controller according to any one of the claims 7 to 9, wherein the means for receiving a start command of an event recording related to a communication comprise means for additionally receiving an indication related to recording terms such as an identification of the events that are to be recorded.

12. A core network (2) of a radio communication system operative to implement an activation of event recordings related to radio terminals (4), the radio communication system additionally comprising at least one radio network controller (1) connected to the core network and operative to control radio communications with radio terminals and at least one operating center (3) capable of monitoring said radio network controller, the core network comprising:
- means for receiving, from the radio network controller, an encoded list of terminal identifiers;
- means for decoding the encoded list;
- means for detecting a communication under the control of the radio network controller, which a terminal identified from within the decoded list; and
- means for commanding the radio network controller of an event recording related to the detected communication.

13. A core network according to claim 12, additionally comprising means for receiving a reference in connection with the encoded list.

14. A core network according to claim 12 or 13, wherein the means for commanding the starting of an event recording related to the detected communication comprise means for transmitting said reference.

15. A core network according to any one of the claims 12 to 14, wherein the means to command the start of an event recording related to the detected communication comprise means for transmitting an indication related to recording terms such as an identification of the events that are to be recorded.

## Patentansprüche

1. Verfahren zum Aktivieren von Ereignisaufzeichnungen in Bezug auf Funkendgeräte (4) in einem Funkkommunikationssystem mit einem Kernnetzwerk (2), mindestens einer Funknetzwerk-Steuereinrichtung (1), welche an das Kernnetzwerk angeschlossen und für die Steuerung der Funkverbindungen mit Endgeräten ausgelegt ist, und mindestens einer Betriebszentrale (3) für die Überwachung der besagten Funknetzwerk-Steuereinrichtung, wobei das Verfahren die folgenden Schritte umfasst:
- Übertragen, ab der Betriebszentrale, einer codierten Liste der Kennungen von Endgeräten an eine Funknetzwerk-Steuereinrichtung;
- Übertragen, ab der Funknetzwerk-Steuereinrichtung, der codierten Liste der Kennungen von Endgeräten an das Kernnetzwerk;
- Decodieren der codierten Liste der Kennungen von Endgeräten im Kernnetzwerk;
- Erkennen, im Kernnetzwerk, einer von der Funknetzwerk-Steuereinrichtung gesteuerten Funkverbindung mit einem in der decodierten Liste identifizierten Endgerät; und
- Antreiben der Funknetzwerk-Steuereinrichtung, ab dem Kernnetzwerk, um eine Ereignisaufzeichnung in Bezug auf die erkannte Verbindung zu starten.

2. Verfahren nach Anspruch 1, wobei die Übertragung der codierten Liste der Kennungen von Endgeräten weiterhin die Übertragung eines Satzes von Parametern bezüglich der Aufzeichnungsmodalitäten wie beispielsweise die Aufzeichnungsdauer oder Kennungen der von der Funknetzwerk-Steuereinrichtung gesteuerten Zonen, auf welche die Ereignisaufzeichnungen beschränkt sind, umfassen, und wobei die Ereignisaufzeichnung in Bezug auf die erkannte Verbindung die besagten Aufzeichnungsmodalitäten einhält.

3. Verfahren nach Anspruch 1 oder 2, wobei der codierten Liste der Kennungen von Endgeräten von der Funknetzwerk-Steuereinrichtung eine Referenz zugeteilt wird, und wobei die besagte Referenz in Verbindung mit der codierten Liste der Kennungen von Endgeräten an das Kernnetzwerk übertragen wird.

4. Verfahren nach Anspruch 3, wobei der Befehl für den Start einer Ereignisaufzeichnung in Bezug auf die erkannte Verbindung weiterhin die der codierten Liste der Kennungen von Endgeräten zugeteilte Referenz einschließt.

5. Verfahren nach einem beliebigen der vorstehenden Ansprüche, wobei der Befehl für den Start einer Ereignisaufzeichnung in Bezug auf die erkannte Verbindung weiterhin eine Angabe in Bezug auf die Aufzeichnungsmodalitäten wie beispielsweise eine Identifikation der aufzuzeichnenden Ereignisse einschließt.

6. Funkkommunikationssystem, ausgelegt für die Implementierung des Verfahrens zum Aktivieren von Ereignisaufzeichnungen gemäß einem beliebigen der Ansprüche 1 bis 5.

7. Funknetzwerk-Steuereinrichtung (1) in einem Funkkommunikationssystem, ausgelegt für die Implementierung einer Aktivierung von Ereignisaufzeichnungen in Bezug auf Funkendgeräte (4), wobei das Funkkommunikationssystem weiterhin ein Kernnetzwerk (2) und eine Betriebszentrale (3) umfasst, welche für die Überwachung der Funknetzwerk-Steuereinrichtung ausgelegt ist, wobei die Funknetzwerk-Steuereinrichtung an das Kernnetzwerk angeschlossen ist und Mittel zur Steuerung von Funkverbindungen mit Endgeräten umfasst, und weiterhin umfassend:
- Mittel zum Empfangen, von der Betriebszentrale, einer codierten Liste der Kennungen von Endgeräten;
- Mittel zum Übertragen der codierten Liste der Kennungen von Endgeräten an das Kernnetzwerk; und
- Mittel zum Empfangen, von dem Kernnetzwerk, und Ausführen eines Befehls für den Start einer Ereignisaufzeichnung in Bezug auf eine Verbindung mit einem in der codierten Liste der Kennungen von Endgeräten identifizierten Endgerät, wobei die besagte Liste im Kernnetzwerk decodiert wird, wobei die besagte Verbindung im Kernnetzwerk erkannte wurde.

8. Funknetzwerk-Steuereinrichtung nach Anspruch 7, wobei die Mittel zum Empfangen einer codierten Liste der Kennungen von Endgeräten weiterhin Mittel zum Empfangen eines Satzes von Parametern in Bezug auf die Aufzeichnungsmodalitäten wie beispielsweise eine Aufzeichnungsdauer oder Kennungen der von der Funknetzwerk-Steuereinrichtung gesteuerten Zonen, auf welche die Ereignisaufzeichnungen beschränkt sind, umfassen, wobei die Funknetzwerk-Steuereinrichtung weiterhin Mittel zum derartigen Ausführen des Befehls für den Start der Ereignisaufzeichnung in Bezug auf die besagte Verbindung umfasst, dass die besagte Verbindung die besagten Aufzeichnungsmodalitäten einhält.

9. Funknetzwerk-Steuereinrichtung nach Anspruch 7 oder 8, weiterhin umfassend Mittel zum Zuteilen einer Referenz an die codierte Liste der Kennungen von Endgeräten, sowie Mittel zum Übertragen der besagten Referenz an das Kernnetzwerk in Verbindung mit der codierten Liste der Kennungen von Endgeräten.

10. Funknetzwerk-Steuereinrichtung nach einem beliebigen der Ansprüche 7 bis 9, wobei die Mittel zum Empfangen eines Befehls für den Start einer Ereignisaufzeichnung in Bezug auf eine Verbindung weiterhin Mittel zum Empfangen der der codierten Liste der Kennungen von Endgeräten zugeteilten Referenz umfassen.

11. Funknetzwerk-Steuereinrichtung nach einem beliebigen der Ansprüche 7 bis 9, wobei die Mittel zum Empfangen eines Befehls für den Start einer Ereignisaufzeichnung in Bezug auf eine Verbindung weiterhin Mittel zum Empfangen einer Angabe in Bezug auf die Aufzeichnungsmodalitäten wie beispielsweise eine Identifikation der aufzuzeichnenden Ereignisse umfassen.

12. Kernnetzwerk (2) eines Funkkommunikationssystems, ausgelegt für die Implementierung einer Aktivierung von Ereignisaufzeichnungen in Bezug auf Funkendgeräte (4), wobei das Funkkommunikationssystem weiterhin mindestens eine Funknetzwerk-Steuereinrichtung (1), welche an ein Kernnetzwerk angeschlossen und für die Steuerung von Funkverbindungen mit Funkendgeräten ausgelegt ist, und mindestens eine Betriebszentrale (3), welche für die Überwachung der besagten Funknetzwerk-Steuereinrichtung ausgelegt ist, umfasst, wobei das Kernnetzwerk umfasst:
- Mittel zum Empfangen, von der Funknetzwerk-Steuereinrichtung, einer codierten Liste der Kennungen von Endgeräten;
- Mittel zum Decodieren der codierten Liste;
- Mittel zum Erkennen einer von der Funknetzwerk-Steuereinrichtung gesteuerten Funkverbindung mit einem in der decodierten Liste identifizierten Endgerät; und
- Mittel zum Antreiben der Funknetzwerk-Steuereinrichtung, um eine Ereignisaufzeichnung in Bezug auf die erkannte Verbindung zu starten.

13. Kernnetzwerk nach Anspruch 12, weiterhin umfassend Mittel für den Empfang einer Referenz in Verbindung mit der codierten Liste.

14. Kernnetzwerk nach Anspruch 12 oder 13, wobei die Mittel zum Steuern des Starts einer Ereignisaufzeichnung in Bezug auf die erkannte Verbindung Mittel zum Übertragen der besagten Referenz umfassen.

15. Kernnetzwerk nach einem beliebigen der Ansprüche 12 bis 14, wobei die Mittel zum Steuern des Starts einer Ereignisaufzeichnung in Bezug auf die erkannte Verbindung Mittel zum Übertragen einer Angabe in Bezug auf die Aufzeichnungsmodalitäten wie beispielsweise eine Kennung der aufzuzeichnenden Ereignisse umfassen.
